# EUROPÄISCHE PATENTSCHRIFT

(11) **EP 1 785 698 B1**
(45) Veröffentlichungstag und Bekanntmachung des Hinweises auf die Patenterteilung: **17.06.2015**
(21) Anmeldenummer: 06022850.9
(22) Anmeldetag: 02.11.2006
(51) Int. Cl.: G01D 5/347

(54) **Positionsmesseinrichtung und Verfahren zum Betrieb einer Positionsmesseinrichtung**
Position measuring device and method for operating a position measuring device
Dispositif de mesure de position et procédé destiné au fonctionnement d'un dispositif de mesure de position

(30) Priorität: 09.11.2005 DE 102005053789; 01.09.2006 DE 102006041357
(43) Veröffentlichungstag der Anmeldung: 16.05.2007
(73) Patentinhaber: Dr. Johannes Heidenhain GmbH, 83301 Traunreut (DE)
(72) Erfinder: Meissner, Markus, 83132 Pittenhart (DE); Drescher, Jörg, 83083 Riedering (DE)

(56) Entgegenhaltungen:
- EP-A2- 1 081 457
- EP-A2- 1 655 582
- DE-A1- 10 235 669
- DE-C1- 19 843 176
- US-A1- 2004 080 755

## Beschreibung

Die vorliegende Erfindung betrifft eine Positionsmesseinrichtung sowie ein Verfahren zum Betrieb einer Positionsmesseinrichtung.

In Einrichtungen zur Fertigung von Halbleiter-Bauelementen ist es erforderlich die räumliche Position bestimmter Teile, die zueinander beweglich sind, präzise mittels geeigneter Positionsmesseinrichtungen zu bestimmen. Über die ermittelten Positionsinformationen ist dann eine rechnergesteuerte Ablaufsteuerung in diesen Einrichtungen möglich. Bisher erfolgte die hierzu nötige Positionsmessung vorwiegend über mehrere Laserinterferometer. Zukünftig ist davon auszugehen, dass die Genauigkeitsanforderungen an die Positionsmessung bei gleichzeitig steigenden Verfahrgeschwindigkeiten der verschiedenen Teile weiter ansteigen. Bei den dann resultierenden hohen Genauigkeitsforderungen können keine Laserinterferometer als Positionsmesseinrichtungen mehr verwendet werden. Die Brechungsindexschwankungen in der umgebenden Luft führen auch bei optimaler Luftkonditionierung zu inakzeptablen Messwertschwankungen bei der Positionsbestimmung, die in der Größenordnung von einigen Nanometern (nm) liegen.

Aus diesem Grund wurden bereits alternative Positionsmesseinrichtungen für derartige Einrichtungen vorgeschlagen. So ist etwa aus der EP 1 019 669 B1 bekannt, optische Positionsmesseinrichtungen mit sog. Kreuzgittern als zweidimensionale Maßverkörperung einzusetzen. Derartige Positionsmesseinrichtungen seien nachfolgend auch als gitterbasierte Positionsmesseinrichtungen bezeichnet. Diese Systeme werden kaum von eventuellen Brechungsindexschwankungen der Luft beeinflusst und erlauben daher gut reproduzierbare Positionsmessungen.

Optische Positionsmesseinrichtungen mit Gittern als Maßverkörperungen, die die nötigen Auflösungen im Nanometer-Bereich liefern, basieren üblicherweise auf interferentiellen Abtastprinzipien. Hierbei wird in der Regel ein Lichtstrahl einer geeigneten Lichtquelle in mindestens zwei kohärente Teilstrahlenbündel aufgespalten, die nachfolgend mehrere Gitter im Abtaststrahlengang beaufschlagen, bevor sie wiedervereinigt und zur Interferenz gebracht werden. Die letztlich interessierende Positionsinformation ist durch die (verschiebungsabhängige) Phasenlage der beiden interferierenden Teilstrahlenbündel gegeben. Der resultierende Weglängenunterschied ist für die beiden Teilstrahlenbündel zwischen Aufspaltung und Wiedervereinigung in symmetrischen Abtaststrahlengang-Varianten derartiger Systeme üblicherweise annähernd Null. Es ist daher eine geringe Kohärenzlänge des verwendeten Lichts ausreichend, um detektionsseitig die gewünschte Interferenz zu gewährleisten.

In der DE 10 2005 043 569 A1 wird eine weitere interferentielle Positionsmesseinrichtung vorgeschlagen, die vorzugsweise asymmetrische Abtaststrahlengänge für die beiden Teilstrahlenbündel aufweist. Das heißt, dass aufgrund dieser Asymmetrie Weglängenunterschiede für die zur Interferenz gelangenden Teilstrahlenbündel in der Größenordnung bis zu einigen Millimetern (mm) resultieren. In Bezug auf die erforderliche Kohärenzlänge des verwendeten Lichts bedeutet dies, dass die Kohärenzlänge im Bereich von einigen Millimetern (mm) bis hin zu einigen Centimetern (cm) liegen muss, andernfalls ist keine Interferenz der zur Überlagerung kommenden Teilstrahlenbündel möglich.

Die EP 1 655 582, die lediglich bzgl. Art. 54(3) EPÜ relevant ist, offenbart ein Positionsmesssystem, bei der im Messbetrieb ein von einem Wechselstromanteil überlagerter Gleichstrom von einer Stromversorgungseinheit an eine Laserlichtquelle abgebbar ist. Die hierzu vorgesehene Single-Mode-Laserdiode mit einer großen Kohärenzlänge kann über geeignete Maßnahmen in einen Multi-Mode-Betrieb gezwungen werden.

Aus der US 2004/0080755 A1 ist eine interferentielle Positionsmesseinrichtung bekannt, bei der als Lichtquelle ein Halbleiterlaser in Form einer Laserdiode eingesetzt wird. Diese wird in einem Single-Mode-Betrieb verwendet, die Kohärenzlänge dieser Lichtquelle beträgt 200µm.

Die DE 102 35 669 A1 offenbart eine optische Positionsmesseinrichtung mit einer Singlemode-Laserlichtquelle. Diese wechselwirkt derart mit geeigneten Rückkopplungsmitteln, dass in der Singlemode-Laserlichtquelle eine Anregung mehrerer Moden erfolgt und auf diese Art und Weise ein Multimode-Betrieb der Singlemode-Laserlichtquelle resultiert.

Aus der DE 198 43 176 C1 ist ein optischer Encoder bekannt, bei dem als Lichtquellen zwei benachbart angeordnete Lichtemitter in Form von VCSEL-Lichtquellen vorgesehen sind. Die beiden Lichtemitter werden im Pulsbetrieb angesteuert.

Aufgabe der vorliegenden Erfindung ist es, eine Positionsmesseinrichtung mit einer geeigneten Lichtquelle für hochpräzise Positionsmessungen sowie ein Verfahren zu deren Betrieb anzugeben.

Diese Aufgabe wird erfindungsgemäß durch eine Positionsmesseinrichtung gemäß Anspruch 1 gelöst.

Vorteilhafte Ausgestaltungsmöglichkeiten der erfindungsgemäßen Positionsmesseinrichtung ergeben sich aus den Maßnahmen in den abhängigen Ansprüchen.

Ferner wird die obige Aufgabe durch ein Verfahren gemäß Anspruch 12 gelöst.

Vorteilhafte Ausführungsvarianten des erfindungsgemäßen Verfahrens ergeben sich aus den Maßnahmen in den abhängigen Ansprüchen.

Die erfindungsgemäße Positionsmesseinrichtung zur Erfassung der Position zweier Objekte, die in mindestens einer Messrichtung zueinander beweglich angeordnet sind, umfasst eine Maßverkörperung sowie Abtastmittel mit einer Lichtquelle und ein oder mehreren optischen und/oder optoelektronischen Bauelementen zur Erzeugung verschiebungsabhängiger Positionssignale. Die Lichtquelle ist als Halbleiterlaser mit großer Kohärenzlänge ausgebildet, der gepulst in einem Single-Mode-Betrieb arbeitet.

Die Verwendung einer derartigen Lichtquelle bietet weitere Vorteile insbesondere im Hinblick auf den Einsatz der erfindungsgemäßen Positionsmesseinrichtung in Hochpräzisionsanwendungen. So lassen sich aufgrund des gepulsten Betriebs der Lichtquelle auch Messungenauigkeiten vermeiden, die etwa durch einen sog. Einspeicherjitter hervorgerufen werden kön-nen. Hierunter ist die Ungenauigkeit zu verstehen, die aufgrund der Zeit zwischen der Messung und der Ausgabe des eigentlichen Positionsmesswerts resultiert. In diesem Zusammenhang sei ausdrücklich auf die EP 1 334 332 B2 der Anmelderin verwiesen.

Vorzugsweise weist der Halbleiterlaser eine Kohärenzlänge größer als 200µm auf.

In einer vorteilhaften Variante liefert der Halbleiterlaser Lichtpulse mit Pulsdauern im Bereich von 5ns bis 50ns.

Die Lichtquelle kann als DFB-Halbleiterlaser, als DBR-Halbleiterlaser oder aber als modengekoppelter Halbleiterlaser oder modengekoppelter Festkörperlaser ausgebildet sein.

Vorzugsweise sind über die Anordnung der Abtastmittel asymmetrische Teil-Abtaststrahlengänge mit unterschiedlichen optischen Weglängen ausgebildet, die von Teilstrahlenbündeln durchlaufen werden, bevor die Teilstrahlenbündel überlagert zur Interferenz kommen.

Mit Vorteil sind die Abtastmittel in einer relativ zur Maßverkörperung beweglichen Abtasteinheit angeordnet und die Lichtquelle entfernt von der Abtasteinheit angeordnet, wobei die Lichtquelle mittels eines Lichtwellenleiters mit der Abtasteinheit verbunden ist.

Vorzugsweise sind der Positionsmesseinrichtung Mittel zur Bestimmung der Wellenlänge der zur optischen Positionsbestimmung genutzten Strahlung zugeordnet.

Die Mittel zur Bestimmung der Wellenlänge können als Wellenlängenmessgerät ausgebildet sein, dessen Messwerte einer Auswerteeinheit zugeführt werden, die in Verbindung mit einem Metrologie-Modell der Positionsmesseinrichtung eine Korrektur der wellenlängenbedingten Positionsfehler vornimmt.

Ferner können die Mittel zur Bestimmung der Wellenlänge als zusätzliche Positionsmesseinrichtung ausgebildet sein, die eine Abtasteinheit sowie eine Maßverkörperung in einer festen räumlichen Zuordnung umfasst und deren Messwerte einer Auswerteeinheit zugeführt werden, die darüber eine Korrektur der wellenlängenbedingten Positionsfehler vornimmt.

Schließlich können die Mittel zur Bestimmung der Wellenlänge Temperaturerfassungsmittel umfassen, über die eine Bestimmung der Temperatur der Lichtquelle erfolgt und die erfasste Temperatur einer Auswerteeinheit zugeführt wird, die darüber bei bekannter Abhängigkeit der Wellenlänge von der Temperatur eine Korrektur wellenlängenbedingter Positionsfehler vornimmt.

Im Rahmen des erfindungemäßen Verfahrens zum Betrieb einer Positionsmesseinrichtung zur Erfassung der Position zweier Objekte, die in mindestens einer Messrichtung zueinander beweglich angeordnet sind, umfasst die Positionsmesseinrichtung eine Maßverkörperung sowie Abtastmittel mit einer Lichtquelle und ein oder mehreren optischen und/oder optoelektronischen Bauelementen zur Erzeugung verschiebungsabhängiger Positionssignale. Die Lichtquelle ist als Halbleiterlaser mit großer Kohärenzlänge ausgebildet ist, der gepulst in einem Single-Mode-Betrieb betrieben wird.

Vorzugsweise wird der Halbleiterlaser derart gepulst betrieben, dass er Lichtpulse mit Pulsdauern im Bereich von 5ns bis 50ns liefert.

Mit Vorteil wird ferner die Wellenlänge der zur optischen Positionsbestimmung genutzten Strahlung bestimmt.

Zur Bestimmung der Wellenlänge kann etwa ein Wellenlängenmessgerät verwendet werden, dessen Messwerte einer Auswerteeinheit zugeführt werden, mittels der in Verbindung mit einem Metrologie-Modell der Positionsmesseinrichtung eine Korrektur der wellenlängenbedingten Positionsfehler vorgenommen wird.

Alternativ kann zur Bestimmung der Wellenlänge eine zusätzliche Positionsmesseinrichtung verwendet werden, die eine Abtasteinheit sowie eine Maßverkörperung in einer festen räumlichen Zuordnung umfasst und deren Messwerte einer Auswerteeinheit zugeführt werden, mittels der eine Korrektur der wellenlängenbedingten Positionsfehler vorgenommen wird.

Ferner können zur Bestimmung der Wellenlänge Temperaturerfassungsmittel verwendet werden, über die eine Bestimmung der Temperatur der Lichtquelle erfolgt und die erfasste Temperatur einer Auswerteeinheit zugeführt wird, mittels der bei bekannter Abhängigkeit der Wellenlänge von der Temperatur eine Korrektur wellenlängenbedingter Positionsfehler vorgenommen wird.

Weitere Vorteile sowie Einzelheiten der vorliegenden Erfindung ergeben sich aus der nachfolgenden Beschreibung von Ausführungsbeispielen anhand der beiliegenden Figuren.

Es zeigt:
- Figur 1: eine schematisierte Darstellung zur Erläuterung eines ersten Ausführungsbeispiels einer erfindungsgemäßen Positionsmesseinrichtung bzw. des erfindungsgemäßen Verfahrens;
- Figur 2: eine schematisierte Darstellung eines zweiten Ausführungsbeispiels einer erfindungsgemäßen Positionsmesseinrichtung;
- Figur 3a - 3c: je eine schematische Darstellung geeigneter Lichtquellen für die erfindungsgemäße Positionsmesseinrichtung;

- Figur 4a - 4c: jeweils in schematischer Form eine Variante zur Erfassung der Wellenlänge im Fall des Einsatzes erfindungsgemäßer Positionsmesseinrichtungen.

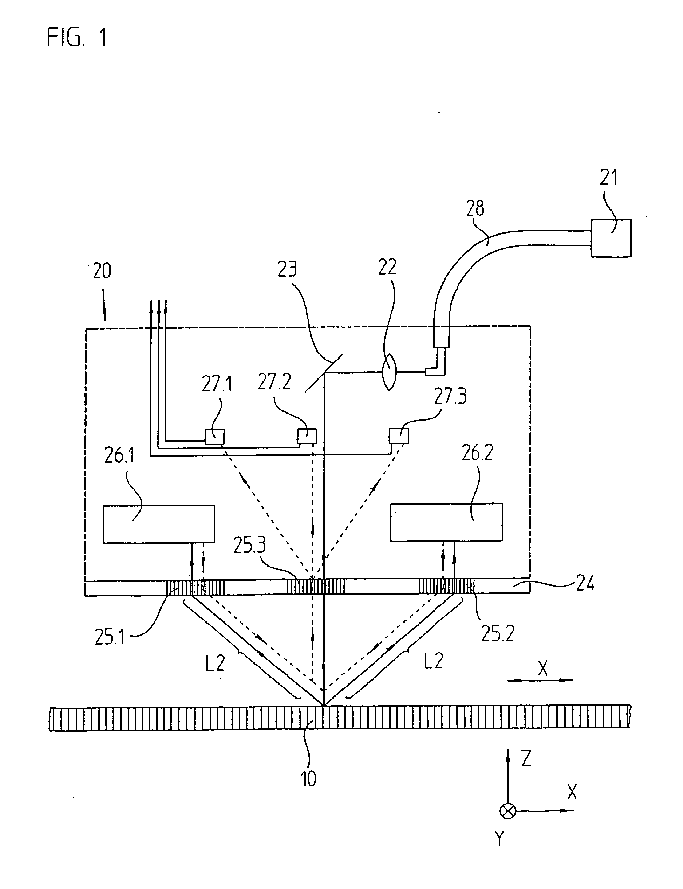

Eine schematisierte Darstellung einer ersten Ausführungsform einer erfindungsgemäßen, gitterbasierten Positionsmesseinrichtung (Encoder) ist in Figur 1 gezeigt.

Die dargestellte Positionsmesseinrichtung umfasst eine Maßverkörperung 10, eine mindestens relativ in Messrichtung x bewegliche Abtasteinheit 20 sowie eine entfernt von der Abtasteinheit 20 angeordnete Lichtquelle 21. Die Maßverkörperung 10 und die Abtasteinheit 20 sind mit zwei - nicht dargestellten - Objekten verbunden, deren Position zueinander erfasst werden soll; beispielsweise handelt es sich hierbei wie eingangs erläutert um relativ zueinander bewegliche Komponenten einer Einrichtung zur Fertigung von Halbleiter-Bauelementen.

Die Maßverkörperung 10 ist im vorliegenden Beispiel als lineare Reflexions-Maßverkörperung ausgebildet und besteht aus alternierend in Messrichtung x angeordneten Bereichen unterschiedlicher Reflektivität.

Die abtastseitigen Elemente zur Erzeugung verschiebungsabhängiger Positionssignale seien nachfolgend auch als Abtastmittel bezeichnet. Neben der Lichtquelle 21 umfassen diese noch verschiedene weitere optische und/oder opto-elektronische Bauelemente. Diese Bauelemente können z.B. in der Abtasteinheit 20 angeordnet sein und/oder aber in einer geeigneten Wirkverbindung mit derselben stehen, z.B. über geeignete Lichtwellenleiter etc.. Zur Erläuterung der Funktionalität der Abtastmittel sei nachfolgend der Abtaststrahlengang des dargestellten Ausführungsbeispiels in Figur 1 nachvollzogen. Bereits an dieser Stelle sei darauf hingewiesen, dass selbstverständlich auch alternative Abtaststrahlengänge im Rahmen der vorliegenden Erfindung realisierbar sind.

Im Beispiel der Figur 1 werden die in Form von Lichtpulsen von der Lichtquelle 21 emittierten Strahlenbündel über einen Lichtwellenleiter 28 der Abtasteinheit 20 zugeführt. In Bezug auf Details besonders geeigneter Lichtquellen sei auf die nachfolgende Beschreibung verwiesen. Über eine Auskoppellinse 22 gelangen die Lichtpulse bzw. Strahlenbündel auf einen Umlenkspiegel 23, der diese in Richtung der Maßverkörperung 10 umlenkt. Durch einen transparenten Bereich einer Abtastplatte 24 an der Unterseite der Abtasteinheit 20 propagieren die Strahlenbündel dann in Richtung Maßverkörperung 10. Dort werden sie beim erstmaligen Auftreffen in zwei Teilstrahlenbündel +1 und -1. Ordnung gebeugt bzw. aufgespalten und in Richtung Abtasteinheit 20 zurückreflektiert. Die aufgespaltenen Teilstrahlenbündel durchtreten dann jeweils erste Abtastgitter 25.1, 25.2 in der Abtastplatte 24 und werden über nachgeordnete Retroreflexionselemente 26.1, 26.2 wieder in Richtung Maßverkörperung 10 zurück umgelenkt; die umgelenkten Teilstrahlenbündel sind in der Figur strichliniert dargestellt. Als Retroreflexionselemente 26.1, 26.2 fungieren beispielsweise geeignete Prismen, Umlenkspiegelkombinationen oder dgl.. Nach dem nochmaligen Durchtreten von - in Figur 1 nicht dargestellten - zweiten Abtastgittern in der Abtastplatte 24 und der dabei resultierenden Richtungs-Ablenkung treffen die Teilstrahlenbündel ein zweites Mal auf die Maßverkörperung 10 auf; es sei darauf hingewiesen, dass die Darstellung der zurückgelenkten Teilstrahlenbündel in Figur 1 lediglich schematisch angedeutet ist, d.h. insbesondere das nochmalige Auftreffen auf der Maßverkörperung 10 ist nicht vollkommen korrekt dargestellt. Auf der Maßverkörperung 10 werden die Teilstrahlenbündel erneut derart gebeugt, dass ein Paar paralleler Teilstrahlenbündel in Richtung der Abtasteinheit 20 propagiert. In der Abtasteinheit 20 treffen die Teilstrahlenbündel auf ein weiteres Abtastgitter 25.3 auf der Abtastplatte 24, wo eine Aufspaltung in drei Paare interferierender Teilstrahlenbündel in drei Raumrichtungen erfolgt. In den entsprechenden Raumrichtungen sind drei Detektorelemente 27.1, 27.2, 27.3 in der Abtasteinheit 20 angeordnet, über die phasenverschobene Positionssignale erfassbar sind.

Alternativ zur dargestellten Anordnung der Detektorelemente 27.1 - 27.3 in der Abtasteinheit 10 ist es möglich, diese ähnlich wie die Lichtquelle 21 räumlich getrennt von derselben anzuordnen und die zu detektierenden Teilstrahlenbündel den Detektorelementen über Lichtwellenleiter zuzuführen.

Im vorliegenden Ausführungsbeispiel der erfindungsgemäßen Positionsmesseinrichtung durchlaufen die Teilstrahlenbündel zwischen der ersten und zweiten Reflexion auf der Maßverkörperung 10 nunmehr deutlich unterschiedliche optische Weglängen L1 und L2, d.h. L1 ≠ L2; dies ist lediglich grob schematisiert in Figur 1 angedeutet. Es liegen somit asymmetrische Teil-Abtaststrahlengänge mit deutlich unterschiedlichen optischen Weglängen für die dann zur Interferenz gelangenden Teilstrahlenbündel vor. Aufgrund dieser Asymmetrie resultieren die oben diskutierten Anforderungen hinsichtlich einer großen Kohärenzlänge der eingesetzten Lichtquelle, wenn detektionsseitig ein Interferenzsignal zur Positionsbestimmung ausgewertet werden soll.

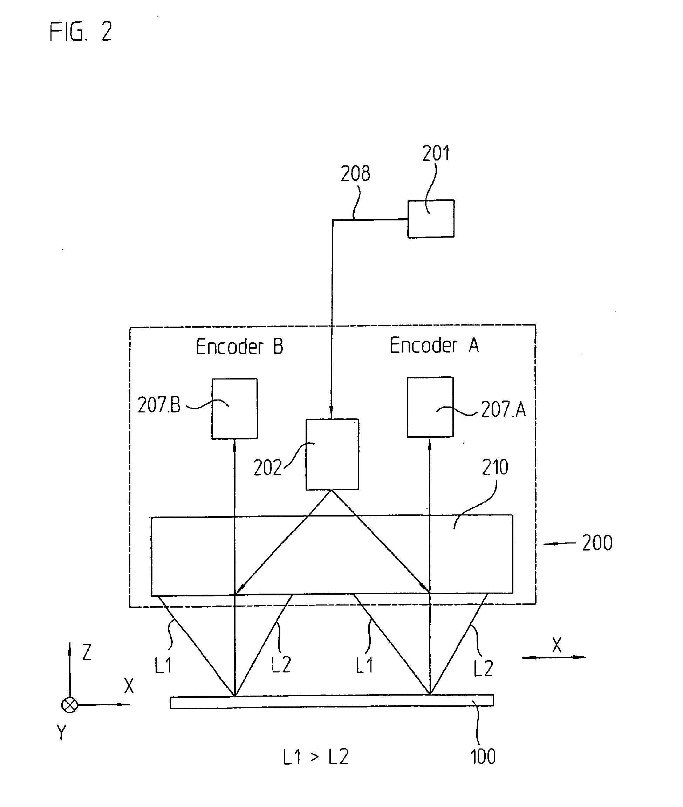

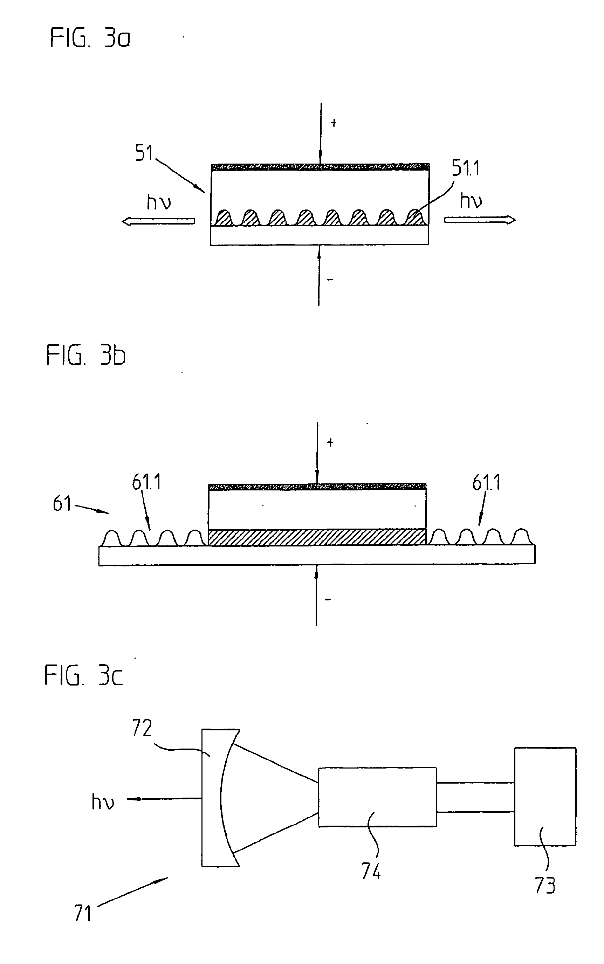

Bevor anhand der Figuren 3a - 3c im Detail auf die geeignete Lichtquellen eingegangen wird, sei anhand von Figur 2 eine zweite Ausführungsform einer erfindungsgemäßen Positionsmesseinrichtung erläutert. Figur 2 stellt wiederum nur eine stark schematisierte Darstellung der entsprechenden Positionsmesseinrichtung dar.

Gezeigt ist in Figur 2 wiederum eine Abtasteinheit 200, die gegenüber einer Maßverkörperung 100 in mindestens einer Messrichtung X beweglich angeordnet ist; die von einer Lichtquelle 201 emittierten Lichtpulse werden der Abtasteinheit 200 wiederum über einen Lichtwellenleiter 208 zugeführt.

Die dargestellte zweite Ausführungsform der Positionsmesseinrichtung gestattet im Unterschied zur Variante aus Figur 1 nunmehr nicht nur die Erfassung der Relativbewegung in der angegebene Messrichtung x, sondern zudem auch eine gleichzeitige Positionsbestimmung in der hierzu senkrechten Richtung z. Es lässt sich demzufolge darüber der Abstand zwischen Maßverkörperung 100 und Abtasteinheit 200 bestimmen.

Zu diesem Zweck umfasst die Abtasteinheit 200 wie in Figur 2 schematisiert angedeutet, zwei derartige Abtaststrahlengänge, wie sie in der Variante gemäß Figur 1 erläutert wurde. In Figur 2 sind die beiden Abtaststrahlengänge mit den Bezeichnungen ENCODER A und ENCODER B versehen. Jeder der beiden Abtaststrahlengänge ist demzufolge prinzipiell ausgebildet wie der Abtaststrahlengang aus dem Beispiel in Figur 1. Insbesondere gilt in Bezug auf die zurückgelegten optischen Weglängen L1, L2 in den aufgespaltenen Teilstrahlengängen, dass diese jeweils deutlich unterschiedlich sind, d.h. wiederum L1 < L2.

Der eingangsseitig gelieferte Lichtpuls einer separat von der Abtasteinheit 200 angeordneten Lichtquelle 201 wird über Lichtwellenleiter 208 der Abtasteinheit 200 zugeführt und über eine Aufspaltoptik 202 auf die beiden Abtaststrahlengänge aufgeteilt; auf die Darstellung von Details in den beiden Abtaststrahlengängen wurde aus Gründen der Übersichtlichkeit verzichtet. Die zu den Abtastmitteln zählenden optischen Bauteile sind in Figur 2 in der Abtasteinheit 200 i.w. schematisiert als Block 210 angedeutet. Ebenfalls nur als schematisierte Blöcke angedeutet sind die auch zu den Abtastmitteln zu zählenden optoelektronischen Detektorelemente 207.A, 207.B. Die über diese Detektorelemente 207.A, 207.B erfassten Signale werden dann zur Weiterverarbeitung einer - nicht dargestellten - Auswerteeinheit zugeführt.

In Bezug auf Details der Abtaststrahlengänge sei an dieser Stelle auch ausdrücklich auf die DE 10 2005 043 569.6 der Anmelderin verwiesen.

Auch in der zweiten Ausführungsform der erfindungsgemäßen Positionsmesseinrichtung wird eine speziell gewählte Lichtquelle eingesetzt, die besondere Vorteile für Hochpräzisionsmessungen bietet.

So ist die Lichtquelle als Halbleiterlaser mit einer großen Kohärenzlänge ausgebildet, der gepulst in einem Single-Mode-Betrieb arbeitet bzw. betrieben wird. Die Kohärenzlänge liegt hierbei vorzugsweise im Bereich zwischen 1 mm und 1 cm. Es kann damit auch im Fall stark asymmetrischer Teil-Abtaststrahlengänge wie in den beiden oben erläuterten Abtastvarianten eine Interferenz der beiden Teilstrahlenbündel sichergestellt werden, die nach der erfolgten zweiten Beugung und Vereinigung an der Maßverkörperung parallel in Richtung der Detektorelemente propagieren.

Ferner kann es die jeweilige Messaufgabe erfordern, ein gepulstes Abtastverfahren einzusetzen, wie es z.B. grundsätzlich aus der EP 1 334 332 B2 bekannt ist. Auf diese Art und Weise ist der Abtastzeitpunkt allein durch den Lichtpuls bestimmt, d.h. der bereits oben erwähnte Einspeicherjitter und die daraus resultierende Messungenauigkeit bei der Positionsbestimmung lässt sich bei gepulsten Abtastverfahren vermeiden bzw. zumindest minimieren.

Der als Lichtquelle vorgesehene Halbleiterlaser muss hierzu also auch gepulst betreibbar sein, wobei Pulsdauern im Bereich zwischen 5ns und 50ns möglich sein müssen. Im Fall der Verwendung herkömmlicher, gepulst betreibbarer Halbleiterlaser bzw. Laserdioden (z.B Fabry-Perot-Laserdioden), wie etwa in der EP 1 334 332 A1 vorgeschlagen, lässt sich lediglich ein Multi-Mode-Betrieb derselben realisieren. Im Multi-Mode-Betrieb jedoch lassen sich nur kurze Kohärenzlängen erreichen, was wiederum der Forderung nach möglichst großen Kohärenzlängen aufgrund asymmetrischer Teil-Abtaststrahlengänge widerspricht.

Die nunmehr erfindungsgemäß gewählten Lichtquellen in Form der Halbleiterlaser mit hinreichend großer Kohärenzlänge, die zudem gepulst im Single-Mode-Betrieb arbeiten, umgehen diese Probleme. Typische Halbleiterlaser, die diesen Anforderungen genügen, sind etwa sog. DFB-Halbleiterlaser [DFB = Distributed Feedback], DBR-Halbleiterlaser [DBR = Distributed Bragg Reflector] oder aber modengekoppelte Halbleiter- bzw. Festkörperlaser.

Die DFB- und die DBR-Halbleiterlaser unterscheiden sich hierbei durch eine zusätzliche Filterstruktur innerhalb des Lasers von herkömmlichen Fabry-Perot-Halbleiterlasern. Diese Filterstruktur führt im dynamischen Betrieb dazu, dass bereits nach sehr kurzer Zeit (ca. 14ps bei DFB-Halbleiterlasern) eine einzige Lasermode herausbildet. Aufgrund dieses sehr schnellen Einschwingvorganges emittiert ein derartiger Halbleiterlaser im Fall von Pulsen im ns-Bereich fast ausschließlich in einer Mode, die eine sehr schmale Bandbreite und somit auch eine hinreichend große Kohärenzlänge für die vorliegende Anwendung besitzt.

In Figur 3a ist ein Ausführungsbeispiel eines DFB-Halbleiterlasers 51 stark schematisiert dargestellt. Bei diesen Halbleiterlasern ist die Filterstruktur als ein innerhalb des Laser-Resonators ausgebildetes Brechungsindex-Gitter 51.1 ausgebildet. Dies hat eine zwar noch mögliche Ausbildung zweier Moden zur Folge, durch technische Maßnahmen hinsichtlich der Systemsymmetrien lässt sich aber letztlich eine Mode gezielt selektieren.

Ein Ausführungsbeispiel eines DBR-Halbleiterlasers 61 ist in Figur 3b ebenfalls stark schematisiert dargestellt. DBR-Halbleiterlaser nutzen ein ähnliches Prinzip wie die erwähnten DFB-Halbleiterlaser. Hier ist der laseraktiven Halbleiterschicht ein Bragg-Gitter 61.1 als Reflektor vor bzw. nachgeschaltet, welches ebenfalls eine Filter-Wirkung hat.

Die beiden erwähnten Halbleiterlaser-Varianten können somit dynamisch single-modig betrieben werden und liefern Kohärenzlängen von mehreren Centimetern (DFB-Halbleiterlaser: > 6cm), was sie als bevorzugte Lichtquellen für die erfindungsgemäße Positionsmesseinrichtung geeignet macht.

Im Gegensatz zu diesen Halbleiterlaser-Typen schwingen bei einem Fabry-Perot-Halbleiterlaser beim Einschalten des Stroms viele Lasermoden an, aus denen sich dann eine einzige Mode aufgrund von Verstärkungsunterschieden herausbildet. Die typische Zeitkonstante liegt hier bei 10ns - 15ns.

Figur 3c zeigt in einer weiteren Schemadarstellung schließlich einen bekannten modengekoppelten Halbleiterlaser, der sich ebenfalls als Lichtquelle 71 für die vorliegende Erfindung eignet. Benachbart zum Lasermedium 74 ist auf der Lichtaustrittsseite ein Spiegel 72 mit einer Reflektivität von etwa 98% angeordnet, auf der entgegengesetzten Resonator-Seite befindet sich ein sättigbares Absorberelement 73, welches je nach Schaltzustand eine Reflektivität von 0% oder 100% besitzt.

Als bereits oben diskutierter Vorteil der relativ großen Kohärenzlängen der erfindungsgemäß gewählten Lichtquellen ist nochmals anzuführen, dass im Unterschied zu Fabry-Perot-Halbleiterlasern mit einer Beschränkung des Gangunterschieds zwischen den zwei interferierenden Teilstrahlen auf weniger als 200µm, nunmehr Abtastprinzipien realisierbar sind, bei denen Teil-abtaststrahlengänge mit Wegunterschieden von bis zu mehreren Centimetern möglich sind.

Dadurch ist man bei der Entwicklung von gepulst betriebenen Positionsmesseinrichtungen nicht mehr auf stark symmetrische Abtaststrahlengänge beschränkt, auch asymmetrische Abtaststrahlengänge sind nun möglich.

Zudem kann der größere zulässige Weglängenunterschied für die interferierenden Teilstrahlenbündel für einen erweiterten Toleranzbereich genutzt werden, da durch ein eventuelles Verkippen der von Maßverkörperung und Abtasteinheit der Positionsmesseinrichtung die beiden interferierenden Teilstrahlenbündel ebenfalls unterschiedlich optische Weglängen durchlaufen. Bei Verwendung der oben erwähnten Lichtquellen, bietet sich nun die Möglichkeit beim Einsatz interferentieller Positionsmesseinrichtungen größere Verkippungstoleranzen als bislang üblich zuzulassen.

Als weiterer Vorteil derartiger Lichtquellen wäre anzuführen, dass diese im Pulsbetrieb einen lediglich geringen "Chirp" aufweisen, d.h. einen geringen Frequenzgang über den zeitlichen Pulsverlauf. Bei herkömmlichen, direkt modulierten Halbleiterlasern resultiert üblicherweise eine Frequenzänderung als Funktion der Zeit während des Pulses. Dieser so genannte Chirp hat einen Einfluss auf die oben diskutierte Kohärenzlänge; so nimmt die Kohärenzlänge mit zunehmendem Chirp ab.

Ferner beeinflusst eine derartige Frequenzänderung den Modulationsgrad des resultierenden Positionssignales. Grundsätzlich nimmt der Modulationsgrad des Positionssignales mit wachsendem Chirp ab. Der Einsatz eines gepulst-betriebenen DFB-Halbleiterlasers bzw. DBR-Halbleiterlasers oder eines modengekoppelten Lasers verbessert also auch das Positionssignal im Vergleich zur Verwendung von Fabry-Perot-Halbleiterlasern als Lichtquellen.

Im Zusammenhang mit den diskutierten Lichtquellen sei zudem erwähnt, dass dieselben auch in anderen Applikationen bzw. anderen Positionsmesseinrichtungen vorteilhaft zum Einsatz kommen können.

Insbesondere im Fall von Positionsmesseinrichtungen mit asymmetrischen Teil-Abtaststrahlengängen ergibt sich im Hinblick auf die verwendete Lichtquelle bzw. die von dieser gelieferte Strahlung ein weiteres Problem. So ist das erzeugte Positionssignal auch von der Wellenlänge der verwendeten Strahlung abhängig. Solange eventuelle Wellenlängenschwankungen innerhalb eines vorgegebenen Zeitintervalles nicht zu groß sind, resultieren keine Fehler bei der Positionsbestimmung; im Fall von zu großen Schwankungen der jeweiligen Wellenlänge und den dann ggf. drohenden Fehlmessungen kann aber auch eine Korrektur dieses Einflusses nötig werden. Hierzu kann im einfachsten Fall die aktuelle Wellenlänge zum Messzeitpunkt oder eine von dieser in bekannter Weise abhängende Position oder eine sonstige Messgröße zu Korrekturzwecken verwendet werden. Mit der bekannten Abhängigkeit der gemessenen Position von der gemessenen Wellenlänge kann diese Position ebenfalls auf einfache Weise im Fall einer Wellenlängenänderung korrigiert werden.

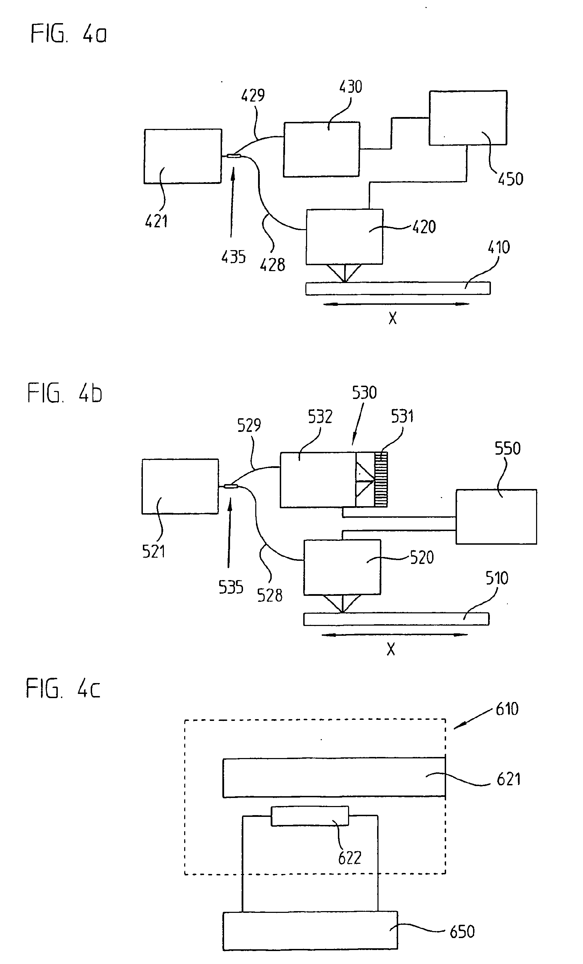

Zur Berücksichtigung von wellenlängenabhängigen Effekten ist demnach grundsätzlich eine Wellenlängenerfassung über geeignete Mittel auf Seiten der verwendeten Positionsmesseinrichtung vorteilhaft, um die daraus resultierenden Informationen zu Korrekturzwecken weiterzuverwerten. Geeignete Möglichkeiten zur Kompensation von wellenlängenbedingten Fehlern bei der Positionsmessung seien nachfolgend anhand der Figuren 4a - 4c erläutert.

Die Kontrolle bzw. Erfassung der Wellenlänge kann in einer ersten Variante etwa über ein Wellenlängenmessgerät in Form eines sog. Wavemeter oder Etalons hoher Auflösung erfolgen; hierzu sei auf das Beispiel in Figur 4a verwiesen. Diese zeigt in stark schematisierter Form eine erfindungemäße Positionsmesseinrichtung mit einer Maßverkörperung 410, einer Abtasteinheit 420, eine über Lichtwellenleiter 428 mit der Abtasteinheit in Wirkverbindung stehende Lichtquelle 421 sowie ein Wellenlängenmessgerät 430, dessen Messwerte einer Auswerteeinheit 450 zugeführt werden. Dem Wellenlängenmessgerät 430 wird über einen Faser-Koppler 435 und einen weiteren Lichtwellenleiter 429 ebenfalls die von der Lichtquelle emittierte Strahlung zur Wellenlängenbestimmung zugeführt.

Mit einem entsprechenden Metrologie-Modell der Positionsmesseinrichtung lassen sich eventuelle Positionsabweichungen aufgrund von Wellenlängenänderungen über die nachfolgende Positionssignalverarbeitung in der Auswerteeinheit 450 korrigieren. Unter einem Metrologie-Modell einer Positionsmesseinrichtung wird grds. eine Funktion, z.B. ein Polynom, verstanden, die den Einfluss von Bewegungstoleranzen (Kippungen), Fertigungstoleranzen (Keilwinkel etc.) und Wellenlänge auf die erzeugte Positionsinformation beschreibt.

Eine alternative, zweite Variante zur Messung der Wellenlänge ist die Verwendung einer zusätzlichen Positionsmesseinrichtung, wie sie auch zur eigentlichen Positionsbestimmung verwendet wird; hierzu sei auf die Figur 4b verwiesen. Die zusätzliche Positionsmesseinrichtung 530 umfasst eine Abtasteinheit 532, die mit einer Maßverkörperung 531 fest verbunden ist; der zusätzlichen Positionsmesseinrichtung 530 wird über den Faserkoppler 535 ebenfalls die Strahlung der Lichtquelle 521 zugeführt, die in der eigentlichen Positionsmesseinrichtung genutzt wird und die wiederum eine Abtasteinheit 520 und eine Maßverkörperung 510 in definiert gleichbleibender Relativorientierung zueinander umfasst. Treten nunmehr in der zusätzlichen Positionsmesseinrichtung Positionsänderungen auf, so sind diese durch Wellenlängen-Schwankungen in der von der Lichtquelle 521 emittierten Strahlung verursacht. Auch in dieser Variante lassen sich über die Auswerteeinheit 550 diese Positionsänderungen in Wellenlängenänderungen umrechnen, bzw. die Positionsänderungen lassen sich direkt zur Korrektur der gemessenen Objekt-Position nutzen. Wird die zur Wellenlängenmessung verwendete Positionsmesseinrichtung dem gleichen thermischen Umfeld wie die zur eigentlichen Positionsbestimmung verwendete Positionsmesseinrichtung ausgesetzt, so lassen sich gleichzeitig auch thermische Driften kompensieren.

In einer dritten Variante, zu der Figur 4c eine schematische Prinzipdarstellung der Lichtquelle zeigt, kann die wellenlängenabhängige Korrektur durch die Messung der Temperatur der verwendeten Lichtquelle 621 erfolgen. Diese wird mit der bekannten Wellenlängenabhängigkeit der Lichtquelle 621 verrechnet, die ggf. noch in einem separaten Messschritt zu bestimmen ist. Hierzu können etwa bekannte Temperatursensoren 622 am eingesetzten Halbleiterlaser angeordnet werden und deren Messwerte einer geeigneten Auswerteeinheit 650 zugeführt werden.

Im Rahmen der vorliegenden Erfindung gibt es neben den erläuterten Beispielen selbstverständlich eine Reihe weiterer Ausführungsmöglichkeiten.

## Patentansprüche

1. Positionsmesseinrichtung zur Erfassung der Position zweier Objekte, die in mindestens einer Messrichtung (x; z) zueinander beweglich angeordnet sind, wobei die Positionsmesseinrichtung eine Maßverkörperung (10; 100; 410; 510; 610) sowie Abtastmittel mit einer Lichtquelle (21; 201; 51; 61; 71; 421; 521; 621) und ein oder mehreren optischen und/oder optoelektronischen Bauelementen zur Erzeugung verschiebungsabhängiger Positionssignale umfasst und die Lichtquelle (21; 201; 51; 61; 71; 421; 521; 621) als Halbleiterlaser ausgebildet ist,
**dadurch gekennzeichnet, dass**
der Halbleiterlaser eine Kohärenzlänge größer als 200µm aufweist und gepulst in einem Single-Mode-Betrieb arbeitet.

2. Positionsmesseinrichtung nach Anspruch 1, **dadurch gekennzeichnet, dass** der Halbleiterlaser Lichtpulse mit Pulsdauern im Bereich von 5ns bis 50ns liefert.

3. Positionsmesseinrichtung nach mindestens einem der Ansprüche 1 - 2, **dadurch gekennzeichnet, dass** die Lichtquelle (21; 201; 51; 421; 521; 621) als DFB-Halbleiterlaser ausgebildet ist.

4. Positionsmesseinrichtung nach mindestens einem der Ansprüche 1 - 2, **dadurch gekennzeichnet, dass** die Lichtquelle als DBR-Halbleiterlaser (21; 201; 61; 421; 521; 621) ausgebildet ist.

5. Positionsmesseinrichtung nach mindestens einem der Ansprüche 1 - 2, **dadurch gekennzeichnet, dass** die Lichtquelle (21; 201; 71; 421; 521; 621) als modengekoppelter Halbleiterlaser oder modengekoppelter Festkörperlaser ausgebildet ist.

6. Positionsmesseinrichtung nach mindestens einem der vorangehenden Ansprüche, **dadurch gekennzeichnet, dass** über die Anordnung der Abtastmittel asymmetrische Teil-Abtaststrahlengänge mit unterschiedlichen optischen Weglängen ausgebildet sind, die von Teilstrahlenbündeln durchlaufen werden, bevor die Teilstrahlenbündel überlagert zur Interferenz kommen.

7. Positionsmesseinrichtung nach mindestens einem der vorangehenden Ansprüche, **dadurch gekennzeichnet, dass** die Abtastmittel in einer relativ zur Maßverkörperung (10; 100; 410; 510; 610) beweglichen Abtasteinheit (20; 200; 420; 520) angeordnet sind und die Lichtquelle (21; 201; 51; 61; 71; 421; 521; 621) entfernt von der Abtasteinheit (20; 200; 420; 520) angeordnet ist, wobei die Lichtquelle (21; 201; 51; 61; 71; 421; 521; 621) mittels eines Lichtwellenleiters (28; 208; 428; 528) mit der Abtasteinheit (20; 200; 420; 520) verbunden ist.

8. Positionsmesseinrichtung nach Anspruch 1, **dadurch gekennzeichnet, dass** dieser Mittel zur Bestimmung der Wellenlänge der zur optischen Positionsbestimmung genutzten Strahlung zugeordnet sind.

9. Positionsmesseinrichtung nach Anspruch 8, **dadurch gekennzeichnet, dass** die Mittel zur Bestimmung der Wellenlänge als Wellenlängenmessgerät (430) ausgebildet sind, dessen Messwerte einer Auswerteeinheit (450) zugeführt werden, die in Verbindung mit einem Metrologie-Modell der Positionsmesseinrichtung eine Korrektur der wellenlängenbedingten Positionsfehler vornimmt.

10. Positionsmesseinrichtung nach Anspruch 8, **dadurch gekennzeichnet, dass** die Mittel zur Bestimmung der Wellenlänge als zusätzliche Positionsmesseinrichtung (530) ausgebildet sind, die eine Abtasteinheit (532) sowie eine Maßverkörperung (531) in einer festen räumlichen Zuordnung umfasst und deren Messwerte einer Auswerteeinheit (550) zugeführt werden, die darüber eine Korrektur der wellenlängenbedingten Positionsfehler vornimmt.

11. Positionsmesseinrichtung nach Anspruch 8, **dadurch gekennzeichnet, dass** die Mittel zur Bestimmung der Wellenlänge Temperaturerfassungsmittel (622) umfassen, über die eine Bestimmung der Temperatur der Lichtquelle (621) erfolgt und die erfasste Temperatur einer Auswerteeinheit (650) zugeführt wird, die darüber bei bekannter Abhängigkeit der Wellenlänge von der Temperatur eine Korrektur wellenlängenbedingter Positionsfehler vornimmt.

12. Verfahren zum Betrieb einer Positionsmesseinrichtung zur Erfassung der Position zweier Objekte, die in mindestens einer Messrichtung (x; z) zueinander beweglich angeordnet sind, wobei die Positionsmesseinrichtung eine Maßverkörperung (10; 100; 410; 510; 610) sowie Abtastmittel mit einer Lichtquelle (21; 201; 51; 61; 71; 421; 521; 621) und ein oder mehreren optischen und/oder optoelektronischen Bauelementen zur Erzeugung verschiebungsabhängiger Positionssignale umfasst und die Lichtquelle (21; 201; 51; 61; 71; 421; 521; 621) als Halbleiterlaser ausgebildet ist,
**dadurch gekennzeichnet, dass**
der Halbleiterlaser eine Kohärenzlänge größer als 200µm aufweist und gepulst in einem Single-Mode-Betrieb betrieben wird.

13. Verfahren nach Anspruch 12, **dadurch gekennzeichnet, dass** der Halbleiterlaser derart gepulst betrieben wird, dass er Lichtpulse mit Pulsdauern im Bereich von 5ns bis 50ns liefert.

14. Verfahren nach Anspruch 12, **dadurch gekennzeichnet, dass** ferner die Wellenlänge der zur optischen Positionsbestimmung genutzten Strahlung bestimmt wird.

15. Verfahren nach Anspruch 14, **dadurch gekennzeichnet, dass** zur Bestimmung der Wellenlänge ein Wellenlängenmessgerät (430) verwendet wird, dessen Messwerte einer Auswerteeinheit (450) zugeführt werden, mittels der in Verbindung mit einem Metrologie-Modell der Positionsmesseinrichtung eine Korrektur der wellenlängenbedingten Positionsfehler vorgenommen wird.

16. Verfahren nach Anspruch 14, **dadurch gekennzeichnet, dass** zur Bestimmung der Wellenlänge eine zusätzliche Positionsmesseinrichtung (530) verwendet wird, die eine Abtasteinheit (532) sowie eine Maßverkörperung (531) in einer festen räumlichen Zuordnung umfasst und deren Messwerte einer Auswerteeinheit (550) zugeführt werden, mittels der eine Korrektur der wellenlängenbedingten Positionsfehler vorgenommen wird.

17. Verfahren nach Anspruch 14, **dadurch gekennzeichnet, dass** zur Bestimmung der Wellenlänge Temperaturerfassungsmittel (622) verwendet werden, über die eine Bestimmung der Temperatur der Lichtquelle erfolgt und die erfasste Temperatur einer Auswerteeinheit (650) zugeführt wird, mittels der bei bekannter Abhängigkeit der Wellenlänge von der Temperatur eine Korrektur wellenlängenbedingter Positionsfehler vorgenommen wird.

## Claims

1. Position measuring device for detecting the position of two objects which are arranged movably relative to one another in at least one measurement direction (x; z), the position measuring device comprising a material measure (10; 100; 410; 510; 610) and scanning means with a light source (21; 201; 51; 61; 71; 421; 521; 621) and one or more optical and/or optoelectronic components for generating displacement-dependent position signals, and the light source (21; 201; 51; 61; 71; 421; 521; 621) being designed as a semiconductor laser, **characterized in that** the semiconductor laser has a coherence length of greater than 200 µm and operates by pulsing in single-mode operation.

2. Position measuring device according to Claim 1, **characterized in that** the semiconductor laser supplies light pulses with pulse durations in the range from 5 ns to 50 ns.

3. Position measuring device according to at least one of Claims 1-2, **characterized in that** the light source (21; 201; 51; 421; 521; 621) is designed as a DFB semiconductor laser.

4. Position measuring device according to at least one of Claims 1-2, **characterized in that** the light source is designed as a DBR semiconductor laser (21; 201; 61; 421; 521; 621).

5. Position measuring device according to at least one of Claims 1-2, **characterized in that** the light source (21; 201; 71; 421; 521; 621) is designed as a mode-locked semiconductor laser or mode-locked solid-state laser.

6. Position measuring device according to at least one of the preceding claims, **characterized in that** via the arrangement of the scanning means asymmetric partial scanning beam paths with different optical path lengths are formed which are traversed by partial beams before the partial beams come to interfere by super-position.

7. Position measuring device according to at least one of the preceding claims, **characterized in that** the scanning means are arranged in a scanning unit (20; 200; 420; 520) which is movable relative to the material measure (10; 100; 410; 510; 610), and the light source (21; 201; 51; 61; 71; 421; 521; 621) is arranged remote from the scanning unit (20; 200; 420; 520), the light source (21; 201; 51; 61; 71; 421; 521; 621) being connected to the scanning unit (20; 200; 420; 520) by means of an optical fibre (28; 208; 428; 528).

8. Position measuring device according to Claim 1, **characterized in that** said device is assigned means for determining the wavelength of the radiation used for optical position determination.

9. Position measuring device according to Claim 8, **characterized in that** the means for determining the wavelength are designed as a wavelength meter (430) whose measured values are fed to an evaluation unit (450) which undertakes a correction of the wavelength-dependent position error in conjunction with a metrology model of the position measuring device.

10. Position measuring device according to Claim 8, **characterized in that** the means for determining the wavelength are designed as an additional position measuring device (530) which comprises a scanning unit (532) and a material measure (531) in a fixed spatial assignment, and whose measured values are fed to an evaluation unit (550) which thereby undertakes a correction of the wavelength-dependent position errors.

11. Position measuring device according to Claim 8, **characterized in that** the means for determining the wavelength include temperature detecting means (622) via which the temperature of the light source (621) is determined and the detected temperature is fed to an evaluation unit (650) which thereby undertakes a correction of wavelength-dependent position errors given a known dependence of the wavelength on the temperature.

12. Method for operating a position measuring device for detecting the position of two objects which are arranged movably relative to one another in at least one measurement direction (x; z), the position measuring device comprising a material measure (10; 100; 410; 510; 610) and scanning means with a light source (21; 201; 51; 61; 71; 421; 521; 621) and one or more optical and/or optoelectronic components for generating displacement-dependent position signals, and the light source (21; 201; 51; 61; 71; 421; 521; 621) being designed as a semiconductor laser, **characterized in that** the semiconductor laser has a coherence length of greater than 200 µm and is operated by pulsing in single-mode operation.

13. Method according to Claim 12, **characterized in that** the semiconductor laser is operated by pulsing in such a way that it supplies light pulses with pulse durations in the range from 5 ns to 50 ns.

14. Method according to Claim 12, **characterized in that** in addition the wavelength of the radiation used for optical position determination is determined.

15. Method according to Claim 14, **characterized in that** the wavelength is determined by using a wavelength meter (430) whose measured values are fed to an evaluation unit (450) by means of which a correction of the wavelength-dependent position errors is undertaken in conjunction with a metrology model of the position measuring device.

16. Method according to Claim 14, **characterized in that** in order to determine the wavelength use is made of an additional position measuring device (530) which comprises a scanning unit (532) and a material measure (531) in a fixed spatial assignment, and whose measured values are fed to an evaluation unit (550) by means of which a correction of the wavelength-dependent position errors is undertaken.

17. Method according to Claim 14, **characterized in that** in order to determine the wavelength use is made of temperature detecting means (622) via which the temperature of the light source is determined and the detected temperature is fed to an evaluation unit (650) by means of which a correction of wavelength-dependent position errors is undertaken given a known dependence of the wavelength on the temperature.

## Revendications

1. Dispositif de mesure de position destiné à détecter la position de deux objets qui sont disposés de manière mobile l'un par rapport à l'autre dans au moins une direction de mesure (x ; z), dans lequel le dispositif de mesure de position comprend un étalon de mesure (10 ; 100 ; 410 ; 510 ; 610) ainsi que des moyens de balayage comportant une source de lumière (21 ; 201 ; 51 ; 61 ; 71 ; 421 ; 521 ; 621) et un ou plusieurs composants optiques et/ou optoélectroniques destinés à générer des signaux de position dépendants du déplacement et la source de lumière (21 ; 201 ; 51 ; 61 ; 71 ; 421 ; 521 ; 621) est réalisée sous la forme d'un laser à semiconducteur,
**caractérisé en ce que**
le laser à semiconducteur présente une longueur de cohérence supérieure à 200 µm et fonctionne de manière pulsée dans un mode de fonctionnement monomode.

2. Dispositif de mesure de position selon la revendication 1, **caractérisé en ce que** le laser à semiconducteur délivre des impulsions lumineuses ayant des durées d'impulsion se situant dans l'intervalle de 5 ns à 50 ns.

3. Dispositif de mesure de position selon au moins l'une des revendications 1-2, **caractérisé en ce que** la source de lumière (21 ; 201 ; 51 ; 421 ; 521 ; 621) est réalisée sous la forme d'un laser à semiconducteur DFB.

4. Dispositif de mesure de position selon au moins l'une des revendications 1 - 2, **caractérisé en ce que** la source de lumière est réalisée sous la forme d'un laser à semiconducteur DBR (21 ; 201 ; 61 ; 521 ; 621).

5. Dispositif de mesure de position selon au moins l'une des revendications 1-2, **caractérisé en ce que** la source de lumière (21 ; 201 ; 71 ; 421 ; 521 ; 621) est réalisée sous la forme d'un laser à semiconducteur à couplage de mode ou d'un laser à solide à couplage de mode.

6. Dispositif de mesure de position selon au moins l'une des revendications précédentes, **caractérisé en ce que** des chemins de faisceaux de balayage partiels asymétriques ayant des longueurs d'onde optiques différentes sont formés par l'intermédiaire de l'agencement des moyens de balayage, lesquels chemins de faisceaux de balayage sont parcourus par des faisceaux partiels avant que les faisceaux partiels n'interférent par superposition.

7. Dispositif de mesure de position selon au moins l'une des revendications précédentes, **caractérisé en ce que** les moyens de balayage sont disposés dans une unité de balayage (20 ; 200 ; 420 ; 520) mobile par rapport à l'étalon de mesure (10 ; 100 ; 410 ; 510 ; 610) et **en ce que** la source de lumière (21 ; 201 ; 51 ; 61 ; 71 ; 421 ; 521 ; 621) est disposée de manière éloignée de l'unité de balayage (20 ; 200 ; 420 ; 520), dans lequel la source de lumière (21 ; 201 ; 51 ; 61 ; 71 ; 421 ; 521 ; 621) est reliée à l'unité de balayage (20 ; 200 ; 420 ; 520) au moyen d'un guide d'ondes optique (28 ; 208 ; 428 ; 528).

8. Dispositif de mesure de position selon la revendication 1, **caractérisé en ce que** des moyens destinés à déterminer la longueur d'onde du rayonnement utilisé pour la détermination optique de la position sont associés à celui-ci

9. Dispositif de mesure de position selon la revendication 8, **caractérisé en ce que** les moyens destinés à déterminer la longueur d'onde sont réalisés sous la forme d'un appareil de mesure de longueur d'onde (430) dont les valeurs de mesure sont envoyées à une unité d'évaluation (450) qui effectue une correction des erreurs de position liées à la longueur d'onde en association avec un modèle de métrologie du dispositif de mesure de position.

10. Dispositif de mesure de position selon la revendication 8, **caractérisé en ce que** les moyens destinés à déterminer la longueur d'onde sont réalisés sous la forme d'un dispositif de mesure de position supplémentaire (530) qui comprend une unité de balayage (532) ainsi qu'un étalon de mesure (531) associés de manière fixe dans l'espace et dont les valeurs de mesure sont envoyées à une unité d'évaluation (550) qui effectue en outre une correction des erreurs de position liées à la longueur d'onde.

11. Dispositif de mesure de position selon la revendication 8, **caractérisé en ce que** les moyens destinés à déterminer la longueur d'onde comprennent de moyens de détection de température (622) par l'intermédiaire desquels une détermination de la température de la source de lumière (621) est effectuée et **en ce que** la température détectée est envoyée à une unité d'évaluation (650) qui effectue en outre, conformément à une relation connue entre la longueur d'onde et la température, une correction d'erreurs de position liées à la longueur d'onde.

12. Procédé de mise en fonctionnement d'un dispositif de mesure de position destiné à détecter la position de deux objets qui sont disposés de manière mobile l'un par rapport à l'autre dans au moins une direction de mesure (x ; z), dans lequel le dispositif de mesure de position comprend un étalon de mesure (10 ; 100 ; 410 ; 510 ; 610) ainsi que des moyens de balayage comportant une source de lumière (21 ; 201 ; 51 ; 61 ; 71 ; 421 ; 521 ; 621) et un ou plusieurs composants optiques et/ou optoélectroniques destinés à générer des signaux de position dépendants du déplacement et la source de lumière (21 ; 201 ; 51 ; 61 ; 71 ; 421 ; 521 ; 621) est réalisée sous la forme d'un laser à semiconducteur,
**caractérisé en ce que**
le laser à semiconducteur présente une longueur de cohérence supérieure à 200 µm et fonctionne de manière pulsée dans un mode de fonctionnement monomode.

13. Procédé selon la revendication 12, **caractérisé en ce que** le laser à semiconducteur est mis en fonctionnement de manière pulsée afin de délivrer des impulsions de lumière ayant des durées d'impulsion se situant dans l'intervalle de 5 ns à 50 ns.

14. Procédé selon la revendication 12, **caractérisé en ce que** la longueur d'onde du rayonnement utilisé pour la détermination optique de la position est en outre déterminée.

15. Procédé selon la revendication 14, **caractérisé en ce que**, pour déterminer la longueur d'onde, on utilise un appareil de mesure de longueur d'onde (430), dont les valeurs de mesure sont envoyées à une unité d'évaluation (450) au moyen de laquelle une correction des erreurs de position liées à la longueur d'onde est effectuée en association avec un modèle de métrologie du dispositif de mesure de position.

16. Procédé selon la revendication 14, **caractérisé en ce que**, pour déterminer la longueur d'onde, on utilise un dispositif de mesure de position supplémentaire (530) qui comprend une unité de balayage (532) ainsi qu'un étalon de mesure (531) associés de manière fixe dans l'espace et dont les valeurs de mesure sont envoyées à une unité d'évaluation (550) au moyen de laquelle une correction des erreurs de position liées à la longueur d'onde est effectuée.

17. Procédé selon la revendication 14, **caractérisé en ce que**, pour déterminer la longueur d'onde, on utilise des moyens de détection de température (622) au moyen desquels on effectue une détermination de la température de la source de lumière et **en ce que** la température détectée est envoyée à une unité d'évaluation (650) au moyen de laquelle, conformément à une relation connue entre la longueur d'onde et la température, une correction d'erreurs de position liées à la température est effectuée.
